(19) Europäisches Patentamt
European Patent Office
Office européen des brevets

(11) **EP 2 057 965 A2**

(12) **EUROPEAN PATENT APPLICATION**

(43) Date of publication:
**13.05.2009 Bulletin 2009/20**

(51) Int Cl.:
*A61C 15/04* (2006.01)

(21) Application number: **08253640.0**

(22) Date of filing: **07.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **08.11.2007 US 937025**

(71) Applicant: **McNeil-PPC, Inc.**
**Skillman, NJ 08558 (US)**

(72) Inventors:
• **Ochs, Harold D.**
**Flemington, NJ 08822 (US)**
• **Knutzen, Josef V.**
**Yardley, PA 19067 (US)**
• **Fougere, Richard J.**
**Washington Crossing, PA 18977 (US)**
• **Lobovsky, Alexander**
**Westfield, NJ 07090 (US)**

(74) Representative: **James, Anthony Christopher W.P. et al**
**Carpmaels & Ransford**
**43-45 Bloomsbury Square**
**London WC1A 2RA (GB)**

(54) **Multi-ribbed dental tape**

(57) The present invention includes monofilament dental tapes for removing plaque and/or food debris from interdental spaces of a mammal, which dental tapes have a core body with an aspect ratio of greater than about 5:1 and a first cleaning surface and a second cleaning surface opposite the first cleaning surface, where at least one of the first and second cleaning surfaces includes a plurality of ribs disposed along the length thereof, and where the ratio of the width of the dental tape to the thickness of the dental tape is from about 4:1 to about 25:1.

**FIG. 2**

Description

**FIELD OF THE INVENTION**

The present invention is directed to multi-ribbed dental tapes for the removal of food particles or debris and plaque from interstices between the teeth.

**BACKGROUND OF THE INVENTION**

Dental floss has been in use for more than 100 years for removing plaque and entrapped food particles from between teeth, as well as providing a clean feeling in the mouth. The original floss consisted of twisted silk placed in a jar. Since then, many improvements have been made to dental floss to make flossing more convenient and less problematic. Most improvements have been aimed at solving the negative aspects of flossing. These include reducing fraying and breakage, providing easier insertion between teeth and providing a softer, more gum and hand friendly floss. With the invention of nylon, a high tenacity fray-resistant yarn was used to replace the silk, providing more fray resistance. The addition of wax to twisted multifilament yarn helped anchor fibers together, while providing a lubricious coating for easier insertion. Similarly, the use of air-entangled fibers in combination with wax (see U. S. Pat. No. 5,908,039) provided a softer, more fray-resistant, and better cleaning multifilament floss. Low friction monofilament PTFE yarn coated with wax (see U. S. Pat. No. 5,518,012) provides good ease of insertion, depending upon the thickness and lack of twists or folds, as well as improved fray resistance. Unfortunately, PTFE monofilaments do not clean well, nor do they easily remove food particles from the space between teeth due to the low coefficient of friction of PTFE.

Improvement in the cleaning and particle removal characteristics was attempted by providing a pseudo monofilament product by encasing multifilaments in a soft polymer, (see U. S. Pat. No. 6,039,054 and U. S. Pat. No. 6,742,528). Such flosses slide easily between teeth, provide improved cleaning and food removal, but fall short on providing softness and fray resistance to the PTFE products.

Further improvements to flosses were attempted by providing monofilament tapes made of elastomeric materials which neck down when passing into the interdental space and then expand upon relieving tension. A low stretch variety is taught in U. S. Pat. No. 6,591,844. While this monofilament tape exhibits a higher elongation range than commercial floss, it is inferior in softness and mouth feel and fails to provide improved cleaning. A very soft "gel" floss is taught in U. S. Pat. No. 6, 029,678, where the yarn is capable of being stretched to at least 200% of its original length, and as much as 2,000% of its original length. In tape form, this floss is at least 0.010 to 0.100-inch thick and more usually from 0.020 to 0.200-inch thick. This means that, while soft, the user will have to apply significant stretch to the product to make it pass between teeth. Once placed in the interdental cavity, this floss will expand and fill the interdental cavity. However, this floss has a smooth surface and is unlikely to remove much plaque or stuck food particles. With this degree of elongation, the consumer may find it difficult to maintain the necessary tension to move the floss up and down during the cleaning process.

Over the years, many improvements have been made to dental floss to make flossing more convenient and less problematic. However, each improvement is typically counterbalanced with a negative effect. Consumer-use tests and clinical studies have shown the monofilament flosses slide better with less fraying, while multifilament products clean better and remove more plaque, but are subject to fraying and breaking. The present invention provides a monofilament tape that not only cleans better than conventional monofilament flosses, but maintains the positive characteristics of monofilament flosses that make them desirable to consumers, such as mouth feel, easy slide between teeth and resistance to fraying or shredding.

**SUMMARY OF THE INVENTION**

The present invention is directed to monofilament dental tapes for removing plaque and/or food debris from interdental spaces of a mammal, which tapes include a core body having an aspect ratio of greater than about 5:1 and a first cleaning surface and a second cleaning surface opposite the first cleaning surface, where at least one of the first and second cleaning surfaces includes a plurality of ribs disposed along the length thereof, and where the ratio of the width of the dental tape to the thickness of the dental tape is from about 3:1 to about 25:1. In certain embodiments the core body of dental tapes of the present invention has an aspect ratio of greater than about 10:1 1 and at least about 8 ribs are disposed along the first and second cleaning surfaces.

**BRIEF DESCRIPTION OF THE DRAWINGS**

FIG. **1** is a cross-sectional view of one embodiment of the dental tape of the present invention;

FIG. **2** is a perspective view of FIG. **1** looking from the top and front;

FIG. **3** is an enlarged cross-sectional view of the FIG. **1**;

FIG. **4** is an enlarged cross-sectional view of another embodiment of the dental tape of the present invention; and

FIGS. **5a-5f** are enlarged cross-sectional views of other embodiments of the ribs of the dental tape of the present invention.

FIGS. **6a-6c** are photographs (50x) of wet pressure sensitive papers after performance of depth of deposit removal (DDR) assessment for several dental tapes.

## DETAILED DESCRIPTION OF THE INVENTION

Monofilament dental tapes according to the present invention comprise a core body having first and second opposing cleaning surfaces, where at least one of the cleaning surfaces comprise a plurality of ribs disposed along the length thereof. As used herein, the term "rib" means a structural element integral with and protruding from the core body of the dental tape, which element has a configuration and dimension effective to provide for removal of plaque and/or food debris from interdental spaces of a mammal. Ribs may protrude substantially perpendicularly from the core body of the dental tape or at an angle. As used herein, the term "cleaning surface" means that surface of the dental tape that contacts the surface of the tooth when placed within the interdental space of the mammal, thereby providing for removal of plaque and/or food debris from the interdental space. The monofilament tape provides the tensile strength and base structure required for good dental floss properties. The tape can be made using commercially available material and known monofilament melt extrusion technology and equipment, it does not fray or break, is easy to hold, and readily accepts coatings.

Preferably, the tape is made using a material that provides a high degree of compressibility when extruded in the cross-sectional configurations of this invention, allowing it to slip through the tight spaces between teeth. Once in the cavity between teeth and into the interdental space, the tape substantially recovers from compression, providing cleaning surfaces containing ribs that act as scrapers to remove plaque and food particles from between the teeth.

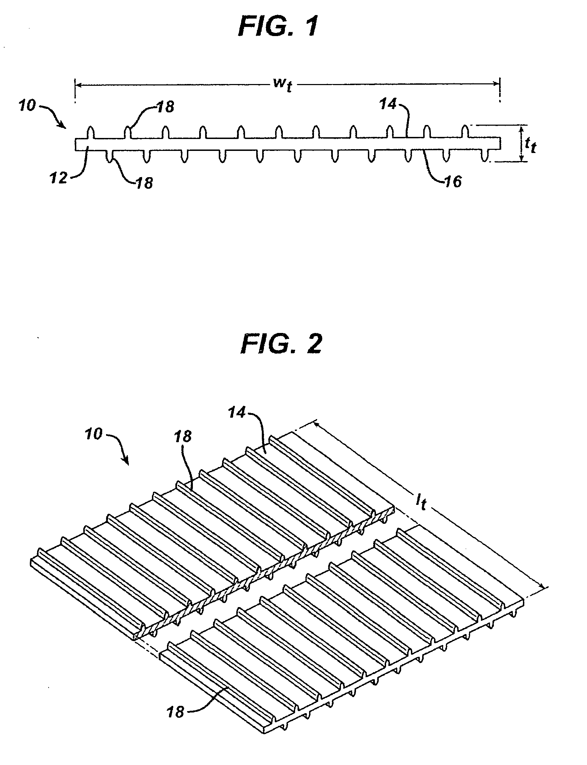

Turning to the drawings, exemplary monofilament dental tape **10** is illustrated in FIGS. **1-3**. FIG. **1** shows a cross-sectional view of an embodiment of dental tape **10** comprised of core body **12** with first cleaning surface **14** and second cleaning surface **16**. In the embodiment presented, ribs **18** protrude from both first cleaning surface **14** and second cleaning surface **16**. In other embodiments, ribs may protrude from only one cleaning surface of the monofilament dental tape. The width of dental tape **10** is represented by $w_t$, while the thickness of tape **10** is represented by $t_t$.

The embodiment depicted in FIG. **1** shows a total of twenty-two ribs **18** protruding from cleaning surfaces **14,16** of monofilament dental tape **10,** eleven from cleaning surface **14,** and eleven from cleaning surface **16**. In other embodiments of the present invention, the total number of ribs protruding from the cleaning surfaces of the dental tape may be greater than about eight, or greater than about twenty. FIG. **1** shows eleven ribs **18** protruding from both first and second cleaning surfaces **14,16** of monofilament dental tape **10**. It is to be understood, however, that in other embodiments, the number of ribs protruding from the first cleaning surface of the dental tape may be the same, about the same, or significantly different than the number of ribs protruding from the second cleaning surface. In some embodiments, all ribs may be disposed along one of the first or second ribs. In addition, though the cross-sectional profile of the monofilament dental tape **10** shown in FIG. **1** is flat, it is to be understood that in other embodiments the tape can have other profiles, such as, but not limited to, arch, wave, or zig-zag.

FIG. **2** shows a perspective view of the FIG. **1** embodiment of dental tape **10** with first cleaning surface **14** and ribs **18** as seen from the top front. The length of dental tape **10** is represented by $l_t$.

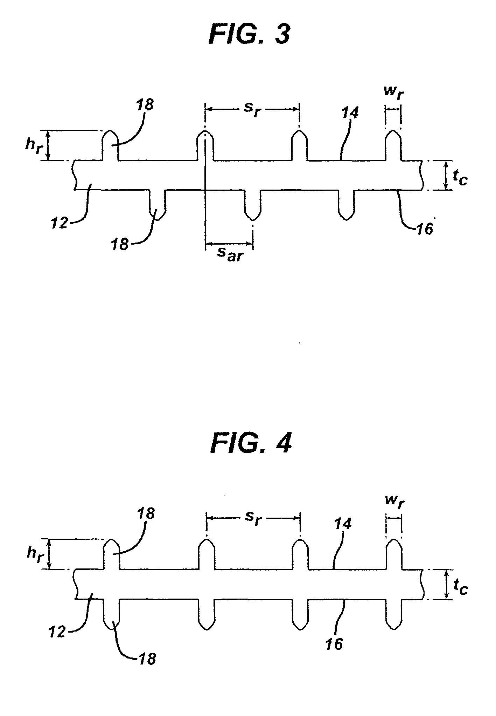

FIG. 3 shows an enlarged cross-sectional view of the FIG. **1** embodiment of dental tape **10**. The thickness of core **12** of tape **10** is represented by $t_c$. The height and width of ribs **18** are represented by $h_r$ and $w_r$, respectively. FIG. **3** shows an embodiment in which all ribs are uniform in height and width. It is to be understood that rib height and width can vary across the cleaning surfaces of the dental tape. For example, in one embodiment, ribs could be shorter and/or thinner at the edges of the cleaning surfaces than at the center of the cleaning surfaces.

The spacing between neighboring ribs **18** on first or second cleaning surface **14,16** of dental tape **10** is represented by $s_r$. In FIG. **3**, $s_r$ is depicted as the spacing between neighboring ribs **18** on first cleaning surface **14** of dental tape **10**. However, it is to be understood that $s_r$ could be used to measure the spacing between neighboring ribs **18** on either the first or second cleaning surfaces **14,16** of dental tape **10**. FIG. **3** shows an embodiment in which the spacing ($s_r$) between neighboring ribs **18** on cleaning surfaces **14,16** of dental tape **10** are about equal for all ribs **18**. However, it is to be understood that the spacing between neighboring ribs on either cleaning surface of the dental tape do not have to be about equal. So, for example, the spacing between the first two neighboring ribs could be represented as $s_{r1-2}$, while the spacing between the next two neighboring ribs could be represented as $s_{r2-3}$, etc. It is envisioned that in other alternative embodiments of the present invention, the spacing between some sets of neighboring ribs could be about equal, while the spacing between other sets of neighboring ribs are not about equal.

The term $s_{ar}$ is used to show the spacing between alternating ribs, that is, the spacing between a rib **18** on first cleaning surface **14** and an adjacent rib **18** on second cleaning surface **16** of dental tape **10**. FIG. **3** shows an embodiment in which spacing between alternating ribs $s_{ar}$ is about one-half the spacing between neighboring ribs $s_r$. So, the ribs on second cleaning surface **16** of dental tape **10** are offset such that they are positioned about midway between those on first cleaning surface **14**. FIG. **4** shows an embodiment in which spacing between alternating ribs $s_{ar}$ is equal to the spacing between neighboring ribs $s_r$. So, the ribs on second cleaning surface **16** of dental tape **10** are aligned with those on first cleaning surface **14**.

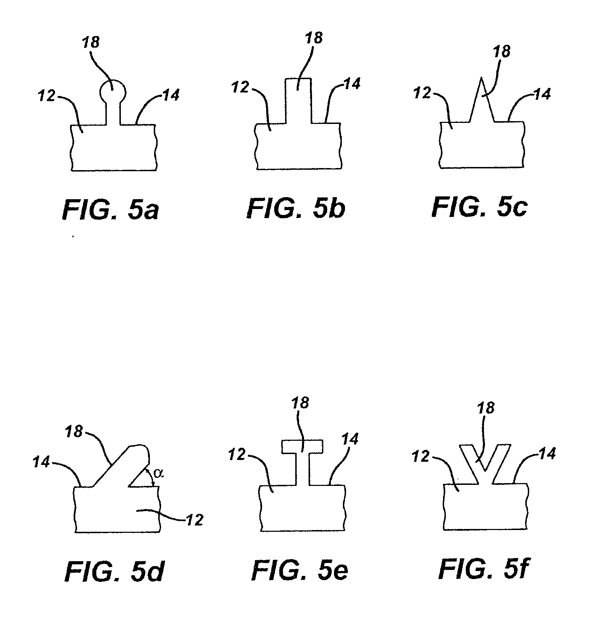

In the exemplary monofilament dental tape **10** embodiments illustrated in FIGS. **1-4,** the cross-sectional shape of ribs **18** is shown as rectangular with a single rounded tip on the distal end of the rib. It is to be understood that other cross-sectional rib shapes are also contemplated embodiments of monofilament ribbed dental tape of the present invention. FIGS. **5a-5f** show a number of other cross-sectional shapes of rib embodiments of the present invention. These rib shapes are just some of the shapes contemplated in the present invention, and it is to be understood that these shapes are not limiting to the spirit of the present invention. In FIG. **5a,** the cross-sectional shape of rib **18** is shown as rectangular with a circular tip on the distal end of the rib. In other embodiments not shown, the tip on the distal end of the rib could be oval or semi-circular. FIGS. **5b** and **5c** depict ribs **18** with cross-sectional shapes that are rectangular and triangular, respectively. Rib **18** shown in FIG. **5d** has a cross-sectional shape of similar to ribs **18** shown FIGS. **1-4,** but rib **18** is shown protruding at an angle of alpha with respect to first cleaning surface **14** of tape **10**. The cross-sectional shape of rib **18** shown in FIGS. **5e** and **5f** are approximately those of the English letters "T" and "V", respectively.

It is to be understood that all ribs on a given embodiment of the present invention may be, but are not required to be, of the same cross-sectional shape. A mixture of cross-sectional shapes may be employed as determined by the use of the ribbed monofilament dental tape.

Effective flossing of teeth involves placing dental floss into the interdental space between the teeth and then drawing the floss up against the side of each individual tooth to scrub as much of the tooth surface as possible. The monofilament ribbed dental tape of the present invention is inserted into the interdental space and moved thusly. Due to the configuration and dimensions of the ribs, the ribs act like squeegees to remove and trap/hold plaque and food debris in the spacing between the respective ribs with a higher degree of efficiency than, for example, a tape that does not include such ribs disposed along the length thereof, thus providing improved cleaning of the irregular surfaces of teeth.

The floss must be able to pass between tight teeth, a gap of several thousandths of an inch. It must be sized to fit through the gap, or be made of a material and construction that can compress when passing into the interdental space. The monofilament ribbed dental tape of the present invention is thin in one dimension to allow it to slide between tight teeth. It is wide in the other direction to provide two substantial cleaning surfaces to contact teeth surfaces. In certain embodiments the aspect ratio of the core body will be at least about 5:1, or at least about 10:1, or even at least about 35:1. The ratio of the width of the dental tape to the thickness of the dental tape may range from about 3:1 to about 25:1, or from about 10:1 to about 20:1.

The monofilament ribbed dental tape of the present invention can be made using a number of materials known in the art. These materials can be elastomeric or non-elastomeric. Some non-elastomeric materials from which the tape can be made include nylon or polytetrafluoroethylene (PTFE).

Preferably, the dental tape is made of a material that can compress when passing into the interdental space, and then recover a percentage of its original form upon passing into the interdental space. Accordingly, dental tapes of the present invention provide a percent compression of greater than about 50 percent and a percent recovery of greater than about 40 percent, or in certain embodiments, a percent compression of greater than about 60 percent and a percent recovery of greater than about 60 percent. Also, since teeth surfaces are not regular, the interdental space between the teeth will be irregular, having areas which are more or less open, depending on the structure of the particular adjacent teeth. As such, it is preferable that the ribs are flexible relative to the core body such that they easily deflect to allow passage into the interdental space. In order to achieve optimal cleaning, it is desirable to have the ribs substantially recover their original dimensions once the force is removed and regain the majority of their original height once the dental tape is in the larger area of the interdental spacing. In this way, the rib will conform to the tooth cross sectional profile, removing more plaque and food.

Materials that may be used to form the multi-ribbed monofilament dental tape of the present invention include, but are not limited to polyamide-polyether block copolymers sold under the tradename PEBAX (Ato Chimie, Hauts-de-Seine France), such as PEBAX 7033, 5533 MX1205, 4033, 3533, and 2533; polyester-polyether block copolymers and polyester-polyester block copolymers sold under the tradename HYTREL (E. 1. du Pont de Nemours & Co., Wilmington, DE), such as HYTREL 7246, 5556, and 4056; aliphatic thermoplastic polyurethane elastomers sold under the tradename TECOFLEX (Lubrizol Advanced Materials, Inc., Cleveland OH); aromatic thermoplastic polyurethane elastomers sold under the tradename PELLETHANE (Dow Chemical Co., Midland, MI); and thermoplastic polyolefin elastomer sold under the name MULTI-FLEX (Dow Chemical Co., Midland, MI).

Dimensions of the monofilament ribbed dental tape of the present invention may be as follows. The width of the dental tape, or $w_t$, is about 0.040 to about 0.100 inches, or about 0.070 to about 0.090 inches. The thickness of the

tape, $t_t$, is about 0.0035 to about 0.012 inches, or about 0.007 to about 0.009 inches. The thickness of the core body of the tape, $t_c$, is about 0.001 to about 0.004 inches, or about 0.002 inches. The height of ribs 18, $h_r$, is about 0.0005 to about 0.004 inches, or about 0.002 inches. The width of the ribs, $w_r$, is about 0.0005 to about 0.003 inches, or about 0.0015 inches. The spacing between neighboring ribs on the cleaning surface of the dental tape, $s_r$, will depend on the width of the dental tape, and the number of ribs on the cleaning surface. For the monofilament ribbed dental tape of the present invention, spacing between neighboring ribs on a cleaning surface is about 0.003 to about 0.020 inches, or about 0.005 to about 0.010 inches.

The term $s_{ar}$ is used to show the spacing between alternating ribs, that is, the spacing between a rib on the first cleaning surface and a rib on the second cleaning surface of the dental tape. For the purposes of this disclosure, the ratio of $s_{ar}$ to $s_r$ defines the special relationship between alternating ribs. That ratio can vary from just greater than 0 when the ribs on the second cleaning surface are slightly out of alignment with those on the first cleaning surface, through 0.5 when the ribs on the second cleaning surface are positioned about midway between those on the first cleaning surface (see FIG. **3**), to 1.0 when the ribs on the second cleaning surface are aligned with those on the first cleaning surface (see FIG. **4**). For the monofilament ribbed dental tape of the present invention, the preferred ratio of $s_{ar}$ to $s_r$ is about 0.5.

The monofilament ribbed dental tape of the present invention may be produced by commercial melt spinning process. In this process, the resin is fed into an extruder screw where the material is heated, melted and passed on to a melt pump. The melt pump meters the molten material into a die with a desired profile machined into the surface such that the profile is imparted on the molten extrudate as it exits the die. The extrudate passes from the die and is allowed to flow downwards and start the process of solidification. Some necking down is typical at that point. The material passes into a water bath where the solidification of polymer melt to solid tape is complete. The tape then undergoes a drawing process where it is stretched in the heated state and final characteristics are achieved. The final dental tape is wound onto spools. The spools can be placed on winding machines where the yarn is wound into bobbins and the bobbins are placed into dispensers or, more preferably, the spools are placed on coating machines first, where coatings can be applied prior to the winding operation.

Alternatively, the ribbed dental tape of the present invention may be comprised of multiple materials formed by co-extrusion, or lamination via rolling or adhesion processes.

The dental tape of the invention could also be produced from sheets of material. The resin would be extruded through a shaped die of the correct dimensions imparting the shape on the film. The extrudate passes from the die and is allowed to flow downwards and start the process of solidification. Some necking down is typical at this point. The material passes into a water bath where the solidification of polymer melt to solid tape is complete. The film could be slit at this point and drawn to final dimensions or it could be drawn first and then slit.

In other embodiments of the monofilament ribbed dental tape of the present invention, coatings can be placed on the first or second cleaning surface of the dental tape. These coatings may include lubricants, such as microcrystalline wax, Beeswax, lightweight polyethylene waxes, silicone oils, essential oils, mineral oil or combinations thereof; sialagogues; olfactory stimulants; sensates; essential oils; release coatings of soluble materials, such a polyethylene glycol (PEG); meltable surfactants such as Polyoxamer 407; liquid flavors; spray dried flavors; abrasives, such as silica and dicalcium phosphate (DCP); actives, such as fluoride; cetyl pyridinim chloride (CPC); tetra sodium pyrophosphate; whitening agents such as calcium peroxide, hydrogen peroxide, carbamide peroxide and other peroxide compounds capable of generating hydrogen peroxide in-situ; antimicrobials; and anti-virals.

Such ingredients may be employed as solids, liquids, particles, gels, or the like, and may be encapsulated in conventional polymeric materials by conventional encapsulation techniques to form encapsulated materials having a polymeric shell and a core comprising the ingredient in one of the noted forms, as the case may be. Such ingredients also may be applied directly to the dental tapes of the present invention without the need for a coating carrier, where appropriate.

A coating comprising an insoluble wax may be applied, wherein the coating contains encapsulated components such as spray dried flavors, essential oils, or other ingredients protected and released from soluble spheres within the insoluble wax, or a soluble coating may be applied directly to the yarn or over the insoluble coating. The soluble coating may contain ingredients that are placed directly in the wax or through the use of spray dried or other encapsulation technologies commonly practiced within the art.

The coating may be applied via emulsion baths, where the tape is pulled through waxes, flavors, and other desired coatings and the amount of coating is controlled by passing the coated tape through a die or roller to squeeze the tape and remove excess coating, or excess coating is slung off. Alternately, coatings may be applied with techniques as described in US20030-188762A1. Coating may also be metered on between individual ribs to provide specific functions.

The coating may be located on the first or second cleaning surface of the dental tape, between ribs, though a small portion of the coating may be located on the ribs. The small portion of coating on the ribs should not appreciably affect the ability of the ribs to act as cleaning elements. It is expected that some of the rib embodiments of the present invention shown in cross-sectional shape in FIGS. **5a-5f** will aid in the retention of coatings on the dental tape.

**EXAMPLES**

Dental tapes illustrated in following examples illustrate specific embodiments of the dental tapes of the present invention, but are not intended to be limiting thereof. Other modifications can be undertaken by the skilled artisan without departing from the spirit and scope of this invention.

**Example 1**

Dental tape of the invention was produced using PEBAX MX 1205 resin. The resin was dried for over 3 hours at 75°C, fed into a Haake 20mm extruder with a Slack and Parr gear melt pump attached and extruded through a shaped die formed of stainless steel, and having a cross-section similar to that of the dental tape shown in FIG. 1. The extruded dental tape included eleven ribs protruding from both the first and second cleaning surfaces. The overall width of the slot $(w_t)$ was 0.303 inches. The thickness of the core body of the die $(t_c)$ was 0.0035 inches. The height and width of the rib portions of the die $(h_r$ and $w_r)$ were 0.0075 inches and 0.0035 inches, respectively. The spacing between neighboring ribs on both cleaning surfaces $(s_r)$ was 0.026 inches, and the ratio of $s_{ar}$ to $s_r$ was 0.5, i.e. the ribs on the second cleaning surface were positioned about midway between those on the first cleaning surface.

The extruded tape passed through a room temperature water bath and was wound on a spool.

One extrusion was performed using the shaped die to prepare the dental of the invention. For comparison, two extrusions were performed through a flat die to prepare comparative dental tapes with no ribs. For Run 2, the die thickness and width were 0.085 inches and 0.490 inches, respectively. For Run 3, the die thickness and width were 0.012 inches and 0.350 inches, respectively.

The conditions for the three extrusions are shown on Table I:

TABLE I: Extrusion conditions.

|  | Run 1 | Run 2 | Run 3 |
|---|---|---|---|
| Die | shaped | flat | flat |
| Barrel T (Zones 1-6), °C | 195 | 220 | 213 |
| Die T, °C | 203 | 233 | 216 |
| Flow rate, cc/min | 4.8 | 4.3 | 6.4 |
| Die to water bath, inches | 1 | 3 | 7 |
| Take-up speed, feet/min | 20 | 24 | 24 |
|  |  |  |  |

The tapes from the three extrusion runs were subjected to drawing operations to produce the final dental tapes. In the drawing operation, the tape was unwound from the spool, passed over a heated roller, across a hot plate, and rewound on a second roller. Conditions for the three drawing runs are shown on Table II:

TABLE II: Drawing conditions.

|  | Run 1 | Run 2 | Run 3 |
|---|---|---|---|
| Roll 1 T, °C | 60 | 60 | 60 |
| Plate T, °C | 100 | 90 | 60 |
| Roll 1 Speed, meter/min | 2 | 2 | 2 |
| Roll 2 Speed, meter/min | 18 | 14 | 12 |
| Draw ratio | 9 to 1 | 7 to 1 | 6 to 1 |
|  |  |  |  |

Some of the tape from Run 1 was coated with a microcrystalline wax, W445 supplied by Crompton (Petrola, PA). This tape was designated as Run 1a. To coat the tape, the tape was pulled through a bath containing the wax at 88°C. Upon leaving the bath, excess wax was removed. The average weight of wax applied was 52% of the weight of the final tape.

The overall width, thickness, and denier of the tapes were measured and are summarized on Table III:

TABLE III: Tape dimensions.

|                   | Run 1 | Run 1a      | Run 2 | Run 3 |
|-------------------|-------|-------------|-------|-------|
| Width, inches     | 0.075 | 0.080-0.090 | 0.073 | 0.072 |
| Thickness, inches | 0.005 | 0.006-0.008 | 0.005 | 0.002 |
| Denier            | 1008  | NA          | 1586  | 861   |
|                   |       |             |       |       |

The compression and recovery expansion of the tapes made above were measured using an apparatus comprised of 2 steel shafts that are used to simulate two adjacent teeth surfaces. One of the steel shafts was stationary, while the other shaft pivoted. A thickness indicator was set to zero when the moving shaft was resting on the fixed shaft. The tape was placed at a ninety-degree angle to the axis of the stationary shaft. The moveable shaft, constructed so as to exert little pressure on the nip point, was allowed to rest on top of the tape, and the original thickness ($t_o$) reading was taken from the indicator. Next, a one-pound weight was applied directly above the nip point, and the compressed thickness ($t_c$) reading was recorded. The percent compression was calculated as

$$\text{Percent Compression} = 100 \text{ x } (t_o - t_c)/ \, t_o$$

A measure of the recovery expansion of the tape was obtained using this device by removing all force and noting the recovery thickness ($t_r$) reading on the indicator. The percent recovery was calculated as:

$$\text{Percent Recovery} = 100 \text{ x } (t_r - t_c)/(t_o - t_c)$$

The percent compression and percent recovery of each of the tapes were measured, and the results are summarized on Table IV:

TABLE IV: Tape compression and recovery.

|                          | Run 1 | Run 1a      | Run 2 | Run 3 |
|--------------------------|-------|-------------|-------|-------|
| Original Thickness, inches | 0.005 | 0.006-0.008 | 0.005 | 0.002 |
| Compression, %           | 70    | 54          | 31    | 25    |
| Recovery, %              | 67    | 52          | 93    | 100   |
|                          |       |             |       |       |

Next, the tensile properties and tenacity of the tapes were measured using an Instron universal testing machine with a specimen length of 10 inches, and a cross-head speed of 10 inches per minute.

The tensile strength, percent elongation at break and tenacity of each of the tapes were measured, and the results are summarized on Table V:

TABLE V: Tape tensile properties.

|                        | Run 1 | Run 1a | Run 2 | Run 3 |
|------------------------|-------|--------|-------|-------|
| Tensile strength, lbs  | 7.5   | 8.1    | 9.8   | 6.5   |
| Elongation at Break, % | 64    | 165    | 87    | 52    |

(continued)

|  | Run 1 | Run 1a | Run 2 | Run 3 |
|---|---|---|---|---|
| Tenacity, grams/denier | 3.7 | 3.6 | 2.8 | 3.1 |
|  |  |  |  |  |

A comparison of the cleaning ability of a number of flosses and tapes was next conducted. The process used is summarized in a paper by Yankel, S.L., et al., "Laboratory Evaluations of Three Dentifrices with Polishing or Brushing", Journal of Clinical Dentistry, 9(3):61-63 (1998). In short, the wet pressure-sensitive paper described in Yankel was placed on the 3/8"-diameter upright shaft. The floss or tape being tested was strung through the eyelets, which pulled the floss back 0.100 inch on either side of the shaft. The eyelets were located equal distance and 1 inch from the centerline of the shaft. A tension of approximately 250 grams force was placed on the floss. The floss was wetted with deionized water from a spray bottle, and the tape or floss was passed up and down on the paper (3/4-inch stroke distance), abrading the paper fibers and exposing the various colored surfaces. The paper was removed after 5 cycles and saved for comparison. The Depth of Deposit Removal (DDR) was recorded using a 0-4 scale from a comparative color chart.

The tape from Run 1, made as discussed above, was tested, as were two commercially available dental flosses. The commercially available dental flosses were a monofilament coated floss sold under the trade name GLIDE ORIGINAL (Proctor & Gamble, Cincinnati, OH), and a wax-coated multifilament floss sold under the trade name REACH MINT WAXED (PPC Division of McNeil-PPC, Inc. Skillman, NJ).

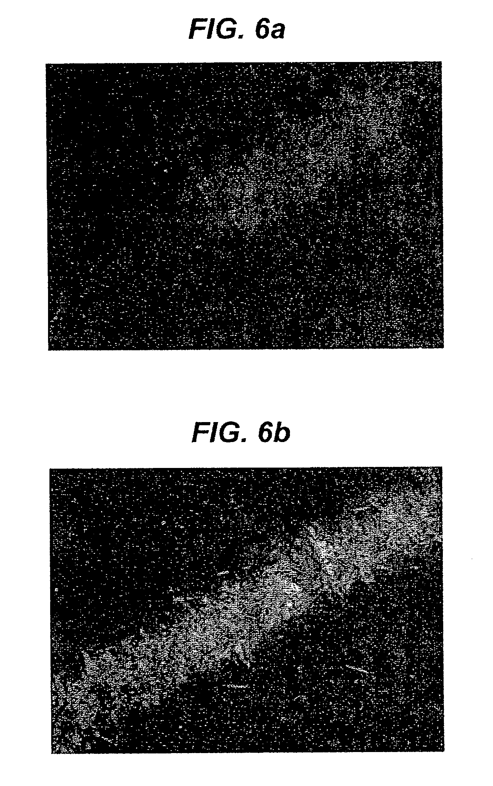

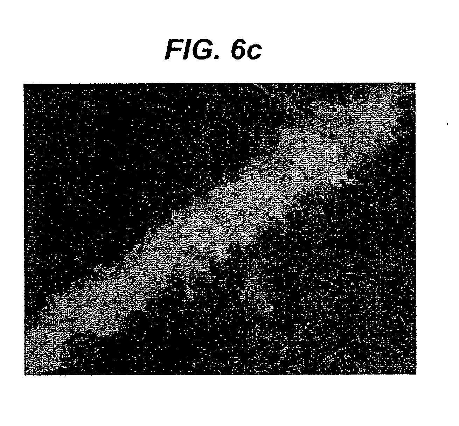

FIGS. **6a-6c** are photographs of wet pressure sensitive papers after performance of depth of deposit removal (DDR) assessment described above for the noted dental flosses and tapes. The images are at magnifications of 50x. The flossing pattern is diagonal with respect to the image from the topright to bottom left. Table VI shows a comparison of the Depth of Deposit Removal (DDR) values for the tapes tested.

TABLE VI - Depth of Deposit Removal (DDR) for Noted Flosses and Tapes

| Floss/Tape | DDR | Figure |
|---|---|---|
| REACH MINT WAXED | 1.0 | 6b |
| GLIDE ORIGINAL | 0.25 | 6a |
| Run 1 | 1.25 | 6c |

The results showed that the ribbed dental tape of the invention performed as well as or somewhat better than the multifilament REACH MINT WAXED floss, and superior to the monofilament GLIDE ORIGINAL floss.

Finally, a comparison of the toughness of a number of tapes and flosses was conducted. In brief, a toughness tester as described in U.S. Pat. No. 5,908,039 (Figures 3 and 4), which is incorporated by reference herein, was used. Rather than using teeth in this test, two metal posts were used to replace teeth, shown in Figure 4 of US 5,908,039. Item 21 was a steel cylinder, 0.375 inch diameter by 0.725 long with a threaded surface. The thread was .01 inches deep with a pitch of 0.02 inches. This represents a rough, although not sharp, surface. Item 22 was a conical smooth cylinder, 0.725 inches long. The base of the cone was 0.15 inches in diameter. The cone diameter increased to 0.375 inched in diameter over a length of 0.57 inches, and remained 0 .375 inches for 0.025 inches. The diameter then decreased to 0.125 over the remaining length. A spring force, item 24, was set to exert 1.75-lbs force on tooth 22. The floss or tape to be tested was strung between the simulated teeth. The floss or tape was held with a tension of approximately 250 grams force and the cylinders were move up and down. This was repeated until the tape or floss broke. The test was repeated ten times on each of the tapes or flosses being tested.

The tapes from Runs 1, 1a, and 2, made as discussed above, were tested, as were commercially available dental flosses. The commercially available dental flosses were GLIDE ORIGINAL, GLIDE COMFORT, a lightly waxed monofilament flosses, and REACH MINT WAXED.

A comparison of the cycles to failure for each of the tapes and flosses tested are summarized on Table VII:

TABLE VII - Cycles to Failure for Various Flosses and Tapes

| Floss | Average |
|---|---|
| Mint Waxed | 4.8 |
| Glide Original | 7.6 |
| Glide Comfort | 4.7 |

(continued)

| Floss | Average |
|-------|---------|
| Run 1 | 8.2 |
| Run 1a | 10.3 |
| Run 2 | 2.4 |

Table VII shows the floss of Run 1a has higher average cycle to failure than all others. Run 2 used the same material as Run 1 and 1a, but with a flat cross-section. Surprisingly, Run 1 exhibited a significantly higher cycle to failure than Run 2. While not intending to be bound by the theory, it is believed that the presence of ribs along the surface of the core body of the monofilmanent tape protects the monofilament tape from shredding, thereby providing a dental tape that not only cleans better than a tape without ribs, as shown in Table VI, but that is stronger and more resistant to shredding.

**Example 2**

Dental tape of the invention was produced using several other resins. The resins used are listed on Table VIII.

TABLE VIII:

|  | Resin |
|--------|-------|
| Run 4 | HYTREL 4056 |
| Run 5 | HYTREL 4056 |
| Run 6 | PELLETHANE 2363-90AE |
| Run 7 | MULTIFLEX 1047S |
| Run 8 | TECOFLEX EG-100A |
|  |  |

The resins were dried for over 3 hours at 75°C. They were processed in the extruder of Example 1, using the ribbed die described in Example 1.

The conditions for the extrusions are shown on Table IX:

TABLE IX: Extrusion conditions.

|  | Run 4 | Run 5 | Run 6 | Run 7 | Run 8 |
|--------|-------|-------|-------|-------|-------|
| Barrel T (Zones 1-6), °C | 230 | 225 | 200 | 260 | 187 |
| Die T, °C | 239 | 235 | 202 | 262 | 189 |
| Flow rate, cc/min | NA | NA | 3.2 | 4.3 | 3.2 |
| Die to water bath, inches | 1 | 4 | 2.5 | 8 | 4 |
| Take-up speed, feet/min | 20 | 20 | 20 | 14 | 17 |
|  |  |  |  |  |  |

The tapes from the extrusion runs were drawn following the procedure of Example 1. Conditions for the three drawing runs are shown on Table X:

TABLE X: Drawing conditions.

|  | Run 4 | Run 5 | Run 6 | Run 7 | Run 8 |
|--------|-------|-------|-------|-------|-------|
| Roll 1 T, °C | cold | cold | 50 | 55 | 70 |
| Plate T, °C | 100 | 100 | 90 | 115 | 70 |

(continued)

|  | Run 4 | Run 5 | Run 6 | Run 7 | Run 8 |
|---|---|---|---|---|---|
| Roll 1 Speed, meter/min | 2 | 2 | 2 | 2 | 2 |
| Roll 2 Speed, meter/min | 16 | 15 | 14 | 12 | 16 |
| Draw Ratio | 8 to 1 | 7.5 to 1 | 7 to 1 | 6 to 1 | 8 to 1 |
|  |  |  |  |  |  |

The overall width, thickness, and denier of the tapes were measured, and are summarized on Table XI:

TABLE XI: Tape dimensions.

|  | Run 4 | Run 5 | Run 6 | Run 7 | Run 8 |
|---|---|---|---|---|---|
| Width, inches | 0.080 | 0.080 | 0.090 | 0.070 | 0.060 |
| Thickness, inches | 0.0065 | 0.0065 | 0.0065 | 0.007 | 0.0045 |
|  |  |  |  |  |  |

The tensile properties of the tapes were measured as described in Example 1. The tensile strength and percent elongation at break are summarized on Table XII:

TABLE XII: Tape tensile properties.

|  | Run 4 | Run 5 | Run 6 | Run 7 | Run 8 |
|---|---|---|---|---|---|
| Tensile strength, lbs | 9.5 | 8.7 | 7.6 | 3.1 | 3.5 |
| St. Dev. | 0.3 | 0.6 | 0.4 | 0.2 | 0.4 |
| Elongation at Break, % | 102 | 87 | 105 | 25 | 68 |
| St. Dev. | 4 | 5 | 10 | 6 | 6 |
|  |  |  |  |  |  |

## Example 3

Dental tape of the invention was produced using PEBAX MX 1205 resin where the drawing conditions were modified to change the dimensions of the final tape. The resins were dried for over 3 hours at 75°C, and processed in the extruder of Example 1, using the ribbed die described in Example 1.

The conditions for the extrusions are shown on Table XIII:

TABLE XIII: Extrusion conditions.

|  | Run 9 | Run 10 | Run 11 |
|---|---|---|---|
| Barrel T (Zones 1-6), °C | 205 | 195 | 210 |
| Die T, °C | 207 | 197 | 212 |
| Flow rate, cc/min | 3.2 | 3.2 | 3.2 |
| Die to water bath, inches | 6 | 2 | 1.5 |
| Take-up speed, feet/min | 22 | 22 | 22 |
|  |  |  |  |

The tapes from the extrusion runs were drawn following the procedure of Example 1. Conditions for the three drawing runs are shown on Table XIV:

TABLE XIV: Drawing conditions.

|  | Run 9 | Run 10 | Run 11 |
|---|---|---|---|
| Roll 1 T, °C | cold | cold | 50 |
| Plate T, °C | 80 | 80 | 80 |
| Roll 1 Speed, meter/min | 2 | 2 | 2 |
| Roll 2 Speed, meter/min | 18 | 18 | 18 |
| Draw Ratio | 9 to 1 | 9 to 1 | 9 to 1 |
|  |  |  |  |

The overall width, thickness, and denier of the tapes were measured, and are summarized on Table XV:

TABLE XV: Tape dimensions.

|  | Run 9 | Run 10 | Run 11 |
|---|---|---|---|
| Width, inches | 0.055 | 0.055 | 0.060 |
| Thickness, inches | 0.0035 | 0.0035 | 0.0045 |
|  |  |  |  |

The tensile properties of the tapes were measured as described in Example 1. The tensile strength and percent elongation at break are summarized on Table XVI:

TABLE XVI: Tape tensile properties.

|  | Run 9 | Run 10 | Run 11 |
|---|---|---|---|
| Tensile strength, lbs | 6.4 | 6.6 | 5.0 |
| St. Dev. | 0.1 | 0.5 | 0.5 |
| Elongation at Break, % | 37 | 34 | 138 |
| St. Dev. | 4 | 6 | 10 |
|  |  |  |  |

### Example 4

Dental tape of the invention was produced using PEBAX MX 1205, 3533, and 2533 resins. The resins were dried for over 3 hours at 75°C, and processed in the extruder of Example 1, using the ribbed die described in Example 1.
The conditions for the extrusions are shown on Table XVII:

TABLE XVII: Extrusion conditions.

|  | Run 1 | Run 12 | Run 13 |
|---|---|---|---|
| PEBAX Resin | MX 1205 | 3533 | 2533 |
| Barrel T (Zones 1-6), °C | 195 | 220 | 200 |
| Die T, °C | 203 | 222 | 202 |
| Flow rate, cc/min | 4.8 | 4.8 | 4.8 |
| Die to water bath, inches | 1 | 4 | 3 |
| Take-up speed, feet/min | 20 | 17 | 18 |
|  |  |  |  |

The tapes from the extrusion runs were drawn following the procedure of Example 1. Conditions for the three

11

drawing runs are shown on Table XVIII:

TABLE XVIII: Drawing conditions.

|  | Run 1 | Run 12 | Run 13 |
|---|---|---|---|
| Roll 1 T, °C | 60 | 60 | 70 |
| Plate T, °C | 100 | 100 | 85 |
| Roll 1 Speed, meter/min | 2 | 1 | 2 |
| Roll 2 Speed, meter/min | 18 | 9 | 17 |
| Draw Ratio | 9 to 1 | 9 to 1 | 8.5 to 1 |
|  |  |  |  |

The overall width, thickness, and denier of the tapes were measured, and are summarized on Table XIX:

TABLE XIX: Tape dimensions.

|  | Run 1 | Run 12 | Run 13 |
|---|---|---|---|
| Width, inches | 0.075 | 0.080 | 0.080 |
| Thickness, inches | 0.005 | 0.0055 | 0.005 |
|  |  |  |  |

The tensile properties of the tapes were measured as described in Example 1. The tensile strength and percent elongation at break are summarized on Table XXI:

TABLE XXI: Tape tensile properties.

|  | Run 1 | Run 12 | Run 13 |
|---|---|---|---|
| Tensile strength, lbs | 7.5 | 6.1 | 4.8 |
| Elongation at Break, % | 64 | 142 | 194 |
|  |  |  |  |

**Example 5**

Dental tape of the invention was produced using PEBAX MX 1205 resin where the number of ribs was modified to change the structure of the final tape.

The die was formed of stainless steel, and had a cross-section similar to that in Example 1. The difference is that in Example 1, there were eleven ribs protruding from both the first and second cleaning surfaces. Here, there were five ribs protruding from both the first and second cleaning surfaces. The overall width of the slot, or $w_t$, was 0.305 inches. The thickness of the core body of the die $t_c$ was 0.0035 inches. The height and width of the rib portions of the die ($h_r$ and $w_r$, respectively) were 0.0075 inches and 0.0035 inches. The spacing between neighboring ribs both cleaning surfaces was ($s_r$) is 0.050 inches, and the ratio of $s_{ar}$ to $s_r$ is 0.5, i.e. the ribs on second cleaning surface were positioned about midway between those on first cleaning surface.

The resin was dried for over 3 hours at 75°C, and processed in the extruder of Example 1. The conditions for the extrusions are shown on Table XXII:

TABLE XXII: Extrusion conditions.

|  | Run 1 | Run 14 |
|---|---|---|
| Number of Ribs | 22 | 10 |
| Barrel T (Zones 1-6), °C | 195 | 195 |
| Die T, °C | 203 | 196 |

(continued)

|  | Run 1 | Run 14 |
|---|---|---|
| Flow rate, cc/min | 4.8 | 4.3 |
| Die to water bath, inches | 1 | 2 |
| Take-up speed, feet/min | 20 | 23 |
|  |  |  |

The tapes from the extrusion runs were drawn following the procedure of Example 1. Conditions for the three drawing runs are shown on Table XXIII:

TABLE XXIII: Drawing conditions.

|  | Run 1 | Run 14 |
|---|---|---|
| Roll 1 T, °C | 60 | Cold |
| Plate T, °C | 100 | 80 |
| Roll 1 Speed, meter/min | 2 | 2 |
| Roll 2 Speed, meter/min | 18 | 17 |
| Draw Ratio | 9 to 1 | 8.5 to 1 |
|  |  |  |

The tape was coated with a microcrystalline wax, W445, as described in Example 1, where the coated tape was designated as Run 1a.

The compression and recovery expansion of the tapes was measured as described in Example 1. The percent compression and percent recovery of each of the tapes were measured, and the results are summarized on Table XXIV:

TABLE XXIV: Tape compression and recovery.

|  | Run 1a | Run 14 |
|---|---|---|
| Original Thickness, inches | 0.007 | 0.007 |
| Compression, % | 58 | 61 |
| Recovery, % | 42 | 78 |
|  |  |  |

The toughness of the tapes was conducted by measuring the cycles to failure for each of the tapes as described in Example 1. The results are summarized on Table XXV:

TABLE XXV - Cycles to Failure for Tapes

| Tape | Average |
|---|---|
| Run 1a | 10.3 |
| Run 14 | 4.7 |

While utilizing fewer ribs per cleaning surface may provide as dental tape that is not as strong as one having greater than about 8 per surface, for example 10 or greater, Run 14 demonstrates that having a plurality of ribs disposed along both cleaning surfaces of dental tape improves strength when compared to a dental tape having no ribs, as seen in Run 2, Table VI.

**Example 6**

Dental tape of the invention was produced using PEBAX MX 1205 resin where the width of ribs was modified to change the structure and dimensions of the final tape.

The die was formed of stainless steel, and had a cross-section similar to that in Example 1. There were eleven ribs protruding from both the first and second cleaning surfaces. The overall width of the slot, or $w_t$, was 0.303 inches. The thickness of the core body of the die $t_c$ was 0.0035 inches. The height and width of rib portions of the die ($h_r$ and $w_r$, respectively) were 0.0075 inches and 0.0025 inches. In Example 1, the width of rib portions of the die ($w_r$) was 0.0035 inches. The spacing between neighboring ribs both cleaning surfaces is ($s_r$) was 0.026 inches, and the ratio of $s_{ar}$ to $s_r$ was 0.5, i.e. the ribs on second cleaning surface were positioned about midway between those on first cleaning surface.

The resin was dried for over 3 hours at 75°C, and processed in the extruder of Example 1. The conditions for the extrusions are shown on Table XXVI:

TABLE XXVI: Extrusion conditions.

|  | Run 1 | Run 15 |
| --- | --- | --- |
| Width of Ribs, inches | 0.0035 | 0.0025 |
| Barrel T (Zones 1-6), °C | 195 | 193 |
| Die T, °C | 203 | 193 |
| Flow rate, cc/min | 4.8 | 4.3 |
| Die to water bath, inches | 1 | 2 |
| Takeup speed, feet/min | 20 | 20 |
|  |  |  |

The tapes from the extrusion runs were drawn following the procedure of Example 1. Conditions for the three drawing runs are shown on Table XXVII:

TABLE XXVII: Drawing conditions.

|  | Run 1 | Run 14 |
| --- | --- | --- |
| Roll 1 T, °C | 60 | Cold |
| Plate T, °C | 100 | 85 |
| Roll 1 Speed, meter/min | 2 | 2 |
| Roll 2 Speed, meter/min | 18 | 18 |
| Draw Ratio | 9 to 1 | 9 to 1 |
|  |  |  |

The tape was coated with a microcrystalline wax, W445, as described in Example 1, where the coated tape was designated as Run 1a.

The compression and recovery expansion of the tapes was measured as described in Example 1. The percent compression and percent recovery of each of the tapes were measured, and the results are summarized on Table XXVIII:

TABLE XXVIII: Tape compression and recovery.

|  | Run 1a | Run 15 |
| --- | --- | --- |
| Original Thickness, inches | 0.007 | 0.006 |
| Compression, % | 54 | 63 |
| Recovery, % | 52 | 77 |
|  |  |  |

The toughness of the tapes was conducted by measuring the cycles to failure for each of the tapes as described in Example 1. The results are summarized on Table XXIX:

TABLE XXIX - Cycles to Failure for Tapes

| Tape | Average |
|------|---------|
| Run 1a | 10.3 |
| Run 15 | 10.0 |

## Example 7

Dental tape of the invention is produced using PEBAX MX 1205 resin where the height of the ribs was modified to change the structure and dimensions of the final tape.

The die is formed of stainless steel, and had a cross-section similar to that in Example 1. There were eleven ribs protruding from both the first and second cleaning surfaces. The overall width of the slot, or $w_t$, was 0.303 inches. The thickness of the core body of the die $t_c$ was 0.0035 inches. The height and width of the rib portions of the die ($h_r$ and $w_r$, respectively) were 0.0038 inches and 0.0035 inches. In Example 1, the height of rib portions of the die ($h_r$) was 0.0075 inches. The spacing between neighboring ribs both cleaning surfaces is ($s_r$) was 0.026 inches, and the ratio of $s_{ar}$ to $s_r$ was 0.5, i.e. the ribs on second cleaning surface were positioned about midway between those on first cleaning surface.

The resin was dried for over 3 hours at 75°C, and processed in the extruder of Example 1. The conditions for the extrusions are shown on Table XXX:

TABLE XXX: Extrusion conditions.

|  | Run 1 | Run 16 |
|---|---|---|
| Height of Ribs, inches | 0.0075 | 0.0038 |
| Barrel T (Zones 1-6), °C | 195 | 197 |
| Die T, °C | 203 | 199 |
| Flow rate, cc/min | 4.8 | 4.3 |
| Die to water bath, inches | 1 | 2 |
| Take-up speed, feet/min | 20 | 20 |
|  |  |  |

The tapes from the extrusion runs were drawn following the procedure of Example 1. Conditions for the three drawing runs are shown on Table XXXI:

TABLE XXXI: Drawing conditions.

|  | Run 1 | Run 14 |
|---|---|---|
| Roll 1 T, °C | 60 | Cold |
| Plate T, °C | 100 | 85 |
| Roll 1 Speed, meter/min | 2 | 2 |
| Roll 2 Speed, meter/min | 18 | 18 |
| Draw Ratio | 9 to 1 | 9 to 1 |
|  |  |  |

The tape was coated with a microcrystalline wax, W445, as described in Example 1, where the coated tape was designated as Run 1a.

The compression and recovery expansion of the tapes was measured as described in Example 1. The percent compression and percent recovery of each of the tapes were measured, and the results are summarized on Table XXXII:

15

TABLE XXXII: Tape compression and recovery.

| | Run 1a | Run 16 |
|---|---|---|
| Original Thickness, inches | 0.007 | 0.005 |
| Compression, % | 54 | 57 |
| Recovery, % | 52 | 76 |
| | | |

The toughness of the tapes was conducted by measuring the cycles to failure for each of the tapes as described in Example 1. The results are summarized on Table XXXIII:

TABLE XXXIII - Cycles to Failure for Tapes

| Tape | Average |
|---|---|
| Run 1a | 10.3 |
| Run 16 | 2.0 |

**Claims**

1.  A monofilament dental tape, comprising:

    a core body comprising a first cleaning surface and a second cleaning surface opposite said first cleaning surface, said core body having an aspect ratio of greater than about 10:1; and
    a plurality of ribs disposed along at least one of said first and second cleaning surfaces,

    wherein the ratio of the width of said dental tape to the thickness of said dental tape is from about 3:1 to about 25:1.

2.  The dental tape of claim 1 wherein both of said first and said second cleaning surfaces comprises ribs.

3.  The dental tape of claim of claim 2 wherein the ratio of the width of said dental tape to the thickness of said dental tape is from about 10:1 1 to about 20:1.

4.  The dental tape of claim 3 wherein the cross-sectional configuration of said ribs is substantially rectangular and the ratio of the height of said ribs to the width of said ribs is from about 1.5:1 to about 8:1.

5.  The dental tape of claim 2 wherein the spacing between said ribs is substantially equal.

6.  The dental tape of claim 5 wherein said ribs on said first cleaning surface are aligned with said ribs on said second cleaning surface.

7.  The dental tape of claim 5 wherein said ribs on said first cleaning surface are offset from said ribs on said second cleaning surface.

8.  The dental tape of claim 2 wherein the spacing between said ribs is irregular.

9.  The dental tape of claim 1 further comprising a coating applied thereto, said coating comprising an ingredient selected from the group consisting of a lubricating agent, a release agent, an abrasive, a whitening agent, an active agent, an olfactory stimulant, a sialagogue, a sensate, an essential oil, a flavor, an antimicrobial agent and an anti-viral agent.

10. The dental tape of claim 9 wherein said ingredient is encapsulated.

11. The dental tape of claim 1 wherein said plurality of ribs comprises about 10 ribs.

12. The dental tape of claim 2 wherein said plurality of ribs comprises about 5 ribs disposed along each of said first and said cleaning surfaces.

13. A monofilament dental tape, comprising:

a core body comprising a first cleaning surface and a second cleaning surface opposite said first cleaning surface, said core body having an aspect ratio of greater than about 5:1; and
at least about 8 ribs disposed along said first and said second cleaning surfaces,

wherein the ratio of the width of said dental tape to the thickness of said dental tape is from about 3:1 to about 25:1.

14. The dental tape of claim 13 providing a percent compression of greater than about 50 percent and a percent recovery of greater than about 40 percent.

15. The dental tape of claim 14 wherein each of said first and second surfaces comprises at least about 10 ribs.

16. The dental tape of claim of claim 14 wherein the ratio of the width of said dental tape to the thickness of said dental tape is from about 10:1 1 to about 20:1.

17. The dental tape of claim 16 wherein the cross-sectional configuration of said ribs is substantially rectangular and the ratio of the height of said ribs to the width of said ribs is from about 1.5:1 to about 8:1.

18. The dental tape of claim 17 wherein the spacing between said ribs is substantially equal and wherein said ribs on said first cleaning surface are offset from said ribs on said second cleaning surface.

19. The dental tape of claim 17 providing a percent compression of greater than about 60 percent and a percent recovery of greater than about 60 percent.

20. The dental tape of claim 18 wherein each of said first and second surfaces comprises at least about 10 ribs.

21. The dental tape of claim 13 further comprising a coating applied thereto, said coating comprising an ingredient selected from the group consisting of a lubricating agent, a release agent, an abrasive, a whitening agent, an active agent, an olfactory stimulant, a sialagogue, a sensate, an essential oil, a flavor, an antimicrobial agent and an anti-viral agent.

22. The dental tape of claim 18 further comprising a coating applied thereto, said coating comprising an ingredient selected from the group consisting of a lubricating agent, a release agent, an abrasive, a whitening agent, an active agent, an olfactory stimulant, a sialagogue, a sensate, an essential oil, a flavor, an antimicrobial agent and an anti-viral agent.

23. The dental tape of claim 21 wherein said ingredient is encapsulated.

24. The dental tape of claim 22 wherein said ingredient is encapsulated.

## FIG. 1

## FIG. 2

# FIG. 3

# FIG. 4

**FIG. 5a**

**FIG. 5b**

**FIG. 5c**

**FIG. 5d**

**FIG. 5e**

**FIG. 5f**

## FIG. 6a

## FIG. 6b

## FIG. 6c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5908039 A
- US 5518012 A
- US 6039054 A
- US 6742528 B
- US 6591844 B
- US 20030188762 A1

**Non-patent literature cited in the description**

- **YANKEL, S.L. et al.** Laboratory Evaluations of Three Dentifrices with Polishing or Brushing. *Journal of Clinical Dentistry,* 1998, vol. 9 (3), 61-63